# EUROPEAN PATENT SPECIFICATION

(11) **EP 1 467 013 B1**
(45) Date of publication and mention of the grant of the patent: **26.05.2010**
(21) Application number: 03425226.2
(22) Date of filing: 11.04.2003
(51) Int. Cl.: D06F 37/10, E05F 5/10, E05F 1/12, E05F 3/20, F16F 9/14

(54) **Inner tub with rotary damper for clothes washing machine**
Laugenbehälter mit Rotationsdämpfer für eine Wäschewaschmaschine
Cuve avec un amortisseur rotatif pour machine à laver le linge

(43) Date of publication of application: 13.10.2004
(73) Proprietor: Candy S.p.A., 20052 Monza (MI) (IT)
(72) Inventor: Fumagalli, Silvano, 20052 Monza (Milano) (IT)
(74) Representative: Crippa, Paolo Ernesto

(56) References cited:
- EP-A- 0 529 313
- WO-A-02/42590
- WO-A-03/056121
- FR-A- 2 723 382
- FR-A- 2 793 265
- US-A- 5 419 013
- US-B1- 6 264 264

## Description

The present invention relates to an inner containment tub or drum for a top-loading clothes washing machine.

In top-loading clothes washing machines the inner containment tub is supported rotatably about an essentially horizontal axis and is loaded from the top through an access door in the side wall of the inner containment tub.

The access door usually consists of two flaps hinged to two opposite edges of a loading aperture in the side wall of the inner tub.

The flaps of the door comprise, at their free edges, which are the edges not hinged to the inner tub and which can be engaged together, catch means capable of keeping the door closed while the electrical appliance is in operation.

The catching together of the flaps of the closed door is achieved by torsion springs which exert a powerful pressure on the flaps tending to open them. This pressure means that, when the catch connection is released by hand pressure, the door springs open, sometimes violently. This springing open of the flaps of the door not only represents a risk of injury to the fingers of the user but is also very noisy and objectionable.

In order to slow down the rotary movement of the flaps of the access door, it has been proposed, for example in FR 2 723 382 and in FR 2 793 265, that friction means or dampers be fitted to the hinges of the flaps.

Moreover, WO 0 242 590 discloses a door hinge unit which gradually reduces the closing speed of the door moved from an open to a closed position.

In order for the dampers to sufficiently slow down the movement of the flaps as they open, they must present a resistance to the movement of the flaps that corresponds to the force exerted by the torsion springs.

As a consequence, the use of dampers large enough to prevent violent opening of the flaps means that there is a large resistance to the closing of the flaps. This is added to the force of the torsion springs, so the operation of closing the inner tub is tiring and slow.

The object of the present invention is therefore to provide an inner tub for a clothes washing machine, washer-dryer or tumble dryer having features such as to obviate the drawbacks of the prior art.

This and other objects are achieved by means of an inner tub for a clothes washing machine, washer-dryer or tumble dryer, comprising
- an access door with at least one flap connected rotatably, by a hinge, to the inner tub and loaded by elastic means that move the flap to an open position; and
- a damper capable of slowing the movement of the flap and comprising two portions whose relative movement is damped, the said two portions being connected, one to the inner tub, and the other to the flap, in such a way as to damp the relative movement between the flap and the inner tub, in which the degree of damping of the relative movement between the two portions in the flap opening direction is greater than the degree of damping of the relative movement between the two portions in the flap closing direction.

In order to explain the invention more clearly and highlight its advantages, an illustrative, non-restrictive embodiment thereof will now be described, with reference to the appended drawings in which:

Figure 1 is a diagrammatic partial top view of the inner tub according to the invention;

Figure 2 shows, in a section taken on the line marked II-II in Figure 1, a detail of the inner tub according to the invention in a phase of operation;

Figure 3 shows, in a section taken on the line marked II-II in Figure 1, a detail of the inner tub according to the invention in another phase of operation.

Referring to the drawings, an inner tub for a clothes washing machine, washer-dryer or tumble dryer is indicated as a whole by the reference 1. The inner tub 1 comprises an access door with at least one flap 2 connected rotatably, by a hinge 3, to a side wall 8 of the inner tub 1 and loaded by elastic means, preferably torsion bars 4 or helical torsion springs, which move the flap 2 to an open position.

The inner tub 1 is also provided with at least one damper 5 capable of slowing the movement of the flap 2. The damper 5 comprises two portions 6, 7, whose relative movement is damped and which are connected, one to the inner tub 1, preferably to the side wall 8, and the other to the flap 2, in such a way as to damp the relative movement between the flap 2 and the inner tub 1.

The damper 5 is formed in such a way that the degree of damping of the relative movement between the two portions 6, 7 in the flap 2 opening direction is greater than the degree of damping of the relative movement between the two portions 6, 7 in the flap 2 closing direction.

In accordance with one embodiment, the damper 5 comprises a housing 7 which forms a fixed portion 7 of the said two portions 6, 7, and which defines internally a cavity 9 containing a fluid 12 which is preferably, but not necessarily, viscous. A spindle 6 which forms a moveable portion 6 of the said portions 6, 7, is supported moveably, preferably rotatably, inside the housing 7 and has at least one divider 10, 11. The divider 10, 11 is permeable to the fluid 12 and divides the cavity 9 into at least a first chamber 13 and a second chamber 14. The volumes of the chambers 13 and 14 vary as a function of the position of the divider 10, 11 with respect to the cavity 9 and the permeability of the divider 10, 11 from the first chamber 13 to the second chamber 14 is greater than its permeability from the second chamber 14 to the first chamber 13.

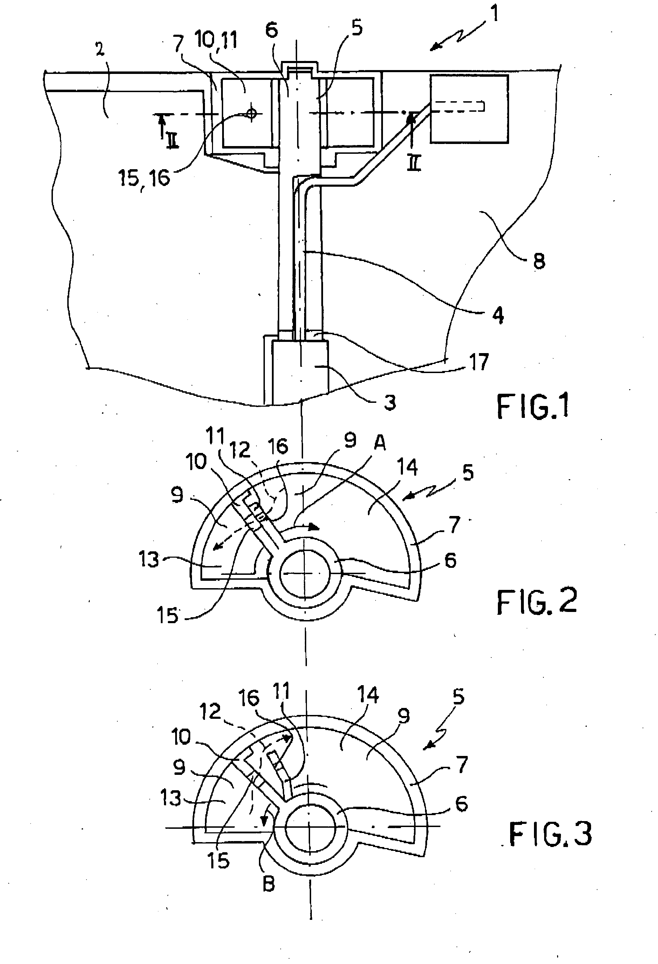

In accordance with one embodiment, shown for example in Figures 2 and 3, the divider 10, 11 comprises an essentially rigid wall 10 containing one or more first through apertures 15 and, associated with a side of the wall 10 that faces the second chamber 14, a closing leaf 11 capable of covering the said first through apertures 15. The closing leaf 11 in turn defines one or more second through apertures 16 lying over the first through apertures 15.

The stiffness of the rigid wall 10 is preferably such that it does not significantly deform under the pressure difference between the two chambers 13, 14 and the closing leaf 11 is connected to the moveable portion or spindle 6 or to the rigid wall 10 itself in such a way that it can move within certain limits. This freedom of movement of the closing leaf 11 is achieved for example by using a hinge connection or by way of the - preferably elastic - flexibility of the leaf itself.

The closing leaf 11 may be for example an elastic, metal, synthetic, rubber or fabric sheet, suitably reinforced, while the rigid wall 10 is preferably a metal or plastic plate.

In accordance with one embodiment, the rigid wall defines a first hole 15 and the closing leaf defines a second hole 16, in which the diameter of the second hole 16 is such as to slow or damp the opening of the flap 2 and the diameter of the first hole 15 is such as to allow the flaps to be closed easily.

The second through hole 16 has an area or aperture or lumen that is smaller than the area or aperture or lumen of the first through hole 15 and the closing leaf 11 is arranged in such a way that, when the flap 2 is being opened, the closing leaf 11 adheres to the wall 10, partially covering the first through hole 15 and forcing the fluid 12 to pass from the second chamber 14 to the first chamber 13 through the second through hole 16. When the flap 2 is being closed, the closing leaf 11 comes away from the first through hole 15, allowing the fluid 12 to pass from the first chamber 13 to the second 14 through the first through hole 15.

In one embodiment, the fluid 12 is silicone, the diameter D1 of the first hole 15 is 5 mm and the diameter D2 of the second hole is 2.2 mm. Advantageously, 8 mm > D1 > 3 mm and 6 mm > D2 > 1.5 mm and D1 > D2, in which D2 is preferably 1/8 D1 ... 7/8 D1, and still more preferably 1/4 D1 ... 1/2 D1.

Advantageously, the housing 7 of the damper 5 is fixed to the side wall 8 of the inner tub 1 and the spindle 6 is fixed to so as to rotate with, the flap 2, preferably fixed to and rotating with an axle 17 formed as one piece with the flap 2.

In accordance with one embodiment, a free portion 18 of the spindle 6 that extends out of the housing 7 and is connected to the axle 17, defines a seat 19 for at least part of the abovementioned torsion bar 4.

Advantageously, the fluid 12 inside the chambers 13 and 14 of the damper is selected from the group containing lubricating greases and silicone.

The operation of the inner tub according to the invention will now be described.

When the flaps 2 are being opened, the spindle 6 rotates relative to the housing 7 in the direction of arrow A (Figure 2). Because of the reduction of the volume in the chamber 14, the pressure of the fluid 12 increases inside the latter and pushes the closing flap 11 against the wall 10, so that the fluid 12 in the second chamber 14 has to pass through the second through hole 16, the diameter of which is smaller than that of the first hole 15. As a result, the resistance to movement of the spindle 6 and hence of the flap 2 is great enough to slow it down as desired.

When the flap 2 is being closed, the spindle 6 rotates in the direction of arrow B (Figure 3). Because of the increase of the volume in the chamber 14, the pressure of the fluid 12 decreases inside the latter and moves the closing flap 11 away from the wall 10, completely exposing the first through hole 15, which is of larger diameter, so that the fluid 12 in the first chamber 13 can flow freely through the first hole 15. As a result, the resistance to movement of the spindle 6 and hence of the flap 2 is reduced to the point where there is little or no slowing action and hence the closing of the flap 2 is not hampered.

The inner tub 1 according to the invention is highly advantageous in as much as it allows the flaps 2 to open slowly and safely but close easily, with no risk of injury to the fingers of the user.

The force required to control the movement of the flaps of the inner tub is advantageously reduced to a minimum sufficient to essentially oppose the elastic means only, which tend to open the flaps.

Clearly, to fulfil any specific requirements which may arise, other modifications and alterations may be made by those skilled in the art to the inner tub according to the present invention, all such modifications and alterations however being contained within the scope of protection of the invention as defined in the following claims.

## Claims

1. Inner tub (1) for a clothes washing machine, washer-dryer or tumble dryer, comprising
- an access door with at least one flap (2) connected rotatably, by a hinge (3), to the inner tub (1) and loaded by elastic means (4) that tend to move the flap (2) to an open position; and
- a damper (5) capable of slowing the movement of the flap (2) and comprising two portions (6, 7) whose relative movement is damped, the said two portions (6, 7) being connected, one (7) to the inner tub (1), and the other (6) to the flap (2), in such a way as to damp the relative movement between the flap (2) and the inner tub (1), **characterized in that** the degree of damping of the relative movement between the two portions (6, 7) in the flap (2) opening direction is greater than the degree of damping of the relative movement between the two portions (6, 7) in the flap (2) closing direction.

2. Inner tub (1) according to Claim 1, in which
- of the said portions (6, 7), a fixed portion (7) defines a cavity (9) containing a fluid (12); and
- of the said portions (6, 7), the moveable portion (6) has at least one divider (10, 11) permeable to the said fluid (12) which subdivides the cavity (9) into at least a first chamber (13) and a second chamber (14) whose volumes vary as a function of the position of the divider (10, 11) with respect to the cavity (9), in which the permeability of the divider (10, 11) from the first chamber (13) to the second (14) is greater than its permeability from the second chamber (14) to the first (13).

3. Inner tub (1) according to Claim 2, in which the said divider (10, 11) comprises an essentially rigid wall (10) containing a first through hole (15) and, associated with a side of the wall (10) that faces the second chamber (14), a closing leaf (11) capable of selectively covering the first through hole (15), in which the said closing leaf (11) is provided with a second through hole (16) lying over the first through hole (15) and having a smaller area than the first through hole (15), in such a way that, when the flap (2) is being opened, the closing leaf (11) partially covers the first through hole (15) and forcing the fluid (12) to pass from the second chamber (14) to the first chamber (13) through the second through hole (16) and, when the flap (2) is being closed, the closing leaf (11) comes away from the first through hole (15), allowing the fluid (12) to pass from the first chamber (13) to the second (14) through the first through hole (15).

4. Inner tub (1) according to Claim 2 or 3, in which the fluid is chosen from the group containing lubricating grease and silicone.

5. Inner tub (1) according to Claim 2, 3 or 4, in which the said damper (5) is a rotational damper comprising a spindle (6) which forms the moveable portion (6), rotatably supported inside a housing (7) which forms the fixed portion (7).

6. Top-loading clothes washing machine comprising an inner tub (1) according to any one of the preceding claims.

7. Damper (5) for an inner tub (1) for a clothes washing machine, washer-dryer or tumble dryer, comprising two portions (6, 7) whose relative movement is damped, the said two portions (6, 7) being connectable, one (7) to the inner tub (1), and the other (6) to a flap (2) of a door giving access to the inner tub (1), in such a way as to damp the relative movement between the flap (2) and the inner tub (1), **characterized in that** the degree of damping of the relative movement between the two portions (6, 7) in the flap (2) opening direction is greater than the degree of damping of the relative movement between the two portions (6, 7) in the flap (2) closing direction.

## Patentansprüche

1. Innerer Behälter (1) für eine Wäschewaschmaschine, einen Waschtrockner oder einen Wäschetrockner, umfassend:
- eine Zugangstür mit wenigstens einer Klappe (2), die drehbar über ein Gelenk (3) mit dem inneren Behälter (1) verbunden ist und mit elastischen Mitteln (4) vorgespannt ist, welche dazu tendieren, die Klappe (2) in eine offene Position zu bewegen, und
- einen Dämpfer (5), der geeignet ist, die Bewegung der Klappe (2) zu verlangsamen, und der zwei Abschnitte (6, 7) umfasst, deren Relativbewegung gedämpft ist, wobei die zwei Abschnitte (6, 7), einer (7) mit dem inneren Behälter (1) und der andere (6) mit der Klappe (2), auf eine solche Weise verbunden sind, um die Relativbewegung zwischen der Klappe (2) und dem inneren Behälter (1) zu dämpfen,
**dadurch gekennzeichnet, dass** der Grad der Dämpfung der Relativbewegung zwischen den zwei Abschnitten (6, 7) in der Öffnungsrichtung der Klappe (2) größer als der Grad der Dämpfung der Relativbewegung zwischen den zwei Abschnitten (6, 7) in der Schließrichtung der Klappe (2) ist.

2. Innerer Behälter (1) nach Anspruch 1, wobei:
- von den Abschnitten (6, 7) ein ortsfester Abschnitt (7) eine Kavität (9) definiert, die ein Fluid (12) umfasst, und
- von den Abschnitten (6, 7) der bewegliche Abschnitt (6) wenigstens eine für das Fluid (12) durchlässige Trennwand (10, 11) aufweist, welche die Kavität (9) in wenigstens eine erste Kammer (13) und eine zweite Kammer (14) unterteilt, deren Volumina als eine Funktion der Postion der Trennwand (10, 11) bezüglich der Kavität (9) variieren, wobei die Durchlässigkeit der Trennwand (10, 11) von der ersten Kammer (13) zu der zweiten (14) größer als die Durchlässigkeit von der zweiten Kammer (14) zu der ersten (13) ist.

3. Innerer Behälter (1) nach Anspruch 2, wobei die Trennwand (10, 11) eine im Wesentlichen steife Wandung (10) umfasst, die ein erstes Durchgangsloch (15) und, zugeordnet einer Seite der Wandung (10), die der zweiten Kammer (14) zugewandt ist, eine Schließleiste (11) enthält, welche in der Lage ist, wahlweise das erste Durchgangsloch (15) abzudecken, wobei die Schließleiste (11) mit einem zweiten Durchgangsloch (16) versehen ist, welches über dem ersten Durchgangsloch (15) liegt und eine kleinere Fläche als das erste Durchgangsloch (15) aufweist, auf solch eine Weise, dass, wenn die Klappe (2) geöffnet wird, die Schließleiste (11) teilweise das erste Durchgangsloch (15) abdeckt und das Fluid (12) zwingt, von der zweiten Kammer (14) zu der ersten Kammer (13) durch das zweite Durchgangsloch (16) zu passieren, und, wenn die Klappe (2) geschlossen wird, die Schließleiste (11) weg von dem ersten Durchgangsloch (15) kommt, wobei es dem Fluid (12) ermöglicht wird, von der ersten Kammer (13) zu der zweiten Kammer (14) durch das erste Durchgangsloch (15) zu passieren.

4. Innerer Behälter (1) nach Anspruch 2 oder 3, wobei das Fluid aus der Gruppe gewählt ist, die Schmierfett und Silikon enthält.

5. Innerer Behälter (1) nach Anspruch 2, 3 oder 4, wobei der Dämpfer (5) ein Drehdämpfer ist, der eine Spindel (6) umfasst, welche den beweglichen Abschnitt (6) bildet, drehbar gehalten innerhalb eines Gehäuses (7), welches den ortsfesten Abschnitt (7) bildet.

6. Von oben zu beladene Wäschewaschmaschine, umfassen einen inneren Behälter (1) nach einem der vorhergehenden Ansprüche.

7. Dämpfer (5) für einen inneren Behälter (1) für eine Wäschewaschmaschine, einen Waschtrockner oder einen Wäschetrockner, umfassend zwei Abschnitte (6, 7), deren Relativbewegung gedämpft ist, wobei die zwei Abschnitte (6, 7), einer (7) mit dem inneren Behälter (1) und der andere (6) mit einer Klappe (2) einer Tür, die Zugang zu dem inneren Behälter (1) gibt, auf eine solche Weise verbindbar sind, um die Relativbewegung zwischen der Klappe (2) und dem inneren Behälter (1) zu dämpfen,
**dadurch gekennzeichnet, dass** der Grad der Dämpfung der Relativbewegung zwischen den zwei Abschnitten (6, 7) in der Öffnungsrichtung der Klappe (2) größer als der Grad der Dämpfung der Relativbewegung zwischen den zwei Abschnitten (6, 7) in der Schließrichtung der Klappe (2) ist.

## Revendications

1. Cuve intérieure (1) pour une machine à laver le linge, une machine à laver-sécheuse ou une sécheuse, comprenant
une porte d'accès avec au moins un volet (2) connecté à rotation, par une articulation (3), à la cuve intérieure (1) et chargé par des moyens élastiques (4) qui tendent à déplacer le volet (2) vers une position ouverte ; et
un amortisseur (5) pouvant ralentir le mouvement du volet (2) et comprenant deux parties (6, 7) dont le mouvement relatif est amorti, lesdites deux parties (6, 7) étant connectées, l'une (7) à la cuve intérieure (1), et l'autre (6) au volet (2), de façon à amortir le mouvement relatif entre le volet (2) et la cuve intérieure (1), **caractérisée en ce que** le degré d'amortissement du mouvement relatif entre les deux parties (6, 7) dans la direction d'ouverture du volet (2) est supérieur au degré d'amortissement du mouvement relatif entre les deux parties (6, 7) dans la direction de fermeture du volet (2).

2. Cuve intérieure (1) selon la revendication 1, dans laquelle
desdites parties (6, 7), une partie fixe (7) définit une cavité (9) contenant un fluide (12) ; et
desdites parties (6, 7), la partie mobile (6) a au moins un diviseur (10, 11) perméable au dit fluide (12) qui subdivise la cavité (9) en au moins une première chambre (13) et une seconde chambre (14) dont le volume varie en fonction de la position du diviseur (10, 11) par rapport à la cavité (9), dans laquelle la perméabilité du diviseur (10, 11) de la première chambre (13) à la seconde (14) est supérieure à sa perméabilité de la seconde chambre (14) à la première (13).

3. Cuve intérieure (1) selon la revendication 2, dans laquelle ledit diviseur (10, 11) comprend une paroi sensiblement rigide (10) contenant un premier trou de passage (15) et, associé à un côté de la paroi (10) qui fait face à la seconde chambre (14), une feuille de fermeture (11) pouvant couvrir sélectivement le premier trou de passage (15), dans laquelle ladite feuille de fermeture (11) est pourvue d'un second trou de passage (16) reposant sur le premier trou de passage (15) et ayant une surface plus petite que le premier trou de passage (15), de telle manière que, quand le volet (2) est ouvert, la feuille de fermeture (11) couvre partiellement le premier trou de passage (15) et force le fluide (12) à passer de la seconde chambre (14) à la première chambre (13) à travers le second trou de passage (16) et, quand le volet (2) est fermé, la feuille de fermeture (11) s'éloigne du premier trou de passage (15), permettant au fluide (12) de passer de la première chambre (13) à la seconde (14) à travers le premier trou de passage (15).

4. Cuve intérieure (1) selon la revendication 2 ou 3, dans laquelle le fluide est choisi dans le groupe contenant de la graisse de lubrification et du silicone.

5. Cuve intérieure (1) selon la revendication 2, 3 ou 4, dans laquelle ledit amortisseur (5) est un amortisseur rotationnel comprenant une fusée (6) qui forme la partie mobile (6), supportée à rotation dans un logement (7) qui forme la partie fixe (7).

6. Machine à laver le linge à chargement par le dessus comprenant une cuve intérieure (1) selon l'une quelconque des revendications précédentes.

7. Amortisseur (5) pour une cuve intérieure (1) pour une machine à laver le linge, une machine à laver-sécheuse ou une sécheuse, comprenant deux parties (6, 7) dont le mouvement relatif est amorti, lesdites deux parties (6, 7) pouvant être connectées, l'une (7) à la cuve intérieure (1), et l'autre (6) à un volet (2) d'une porte donnant accès à la cuve intérieure (1), de façon à amortir le mouvement relatif entre le volet (2) et la cuve intérieure (1), **caractérisé en ce que** le degré d'amortissement du mouvement relatif entre les deux parties (6, 7) dans la direction d'ouverture du volet (2) est supérieur au degré d'amortissement du mouvement relatif entre les deux parties (6, 7) dans la direction de fermeture du volet (2).
